# EUROPÄISCHE PATENTSCHRIFT

(11) **EP 2 527 666 B1**
(45) Veröffentlichungstag und Bekanntmachung des Hinweises auf die Patenterteilung: **03.12.2014**
(21) Anmeldenummer: 12401085.1
(22) Anmeldetag: 09.05.2012
(51) Int. Cl.: F16B 13/06

(54) **Spreizanker**
Split anchor
Ancre extensible

(30) Priorität: 24.05.2011 DE 102011050583
(43) Veröffentlichungstag der Anmeldung: 28.11.2012
(73) Patentinhaber: fischerwerke GmbH & Co. KG, 72178 Waldachtal (DE)
(72) Erfinder: Hacker, Oliver, 72160 Horb (DE); Linka, Martin, 72160 Horb a.N. (DE); Schäuffele, Jürgen, 72290 Lossburg/Wittendorf (DE)

(56) Entgegenhaltungen:
- DE-A1- 4 400 895
- DE-U1- 29 611 790
- US-A- 4 330 230

## Beschreibung

Die Erfindung betrifft einen Spreizanker mit den Merkmalen des Oberbegriffs des Anspruchs 1.

Aus der EP 1 649 174 B1 ist ein Spreizanker mit einer Spreizhülse bekannt, die durch Längsschlitze in Spreizzungen unterteilt ist, welche allgemein als Spreizelemente aufgefasst werden können. Des Weiteren weist der bekannte Spreizanker einen Spreizkonus auf, der zwischen die Spreizzungen einziehbar ist und die Spreizzungen dabei nach außen drückt, d.h. die Spreizzungen aufspreizt. Der Spreizkonus kann allgemein als Spreizkörper, das Aufspreizen der Spreizzungen als Aufspreizen der Spreizhülse oder als Aufspreizen des Spreizankers aufgefasst werden. Das Einziehen des Spreizkörpers in die Spreizhülse ist gleichbedeutend mit einem Aufschieben der Spreizhülse auf den Spreizkörper, die Spreizzungen werden bzw. die Spreizhülse wird durch eine Relativbewegung des Spreizkörpers zur Spreizhülse aufgespreizt.

Aufgabe der Erfindung ist, einen Spreizanker vorzuschlagen, der das Aufspreizen von selbst beendet.

Diese Aufgabe wird erfindungsgemäß durch die Merkmale des Anspruchs 1 gelöst. Der erfindungsgemäße Spreizanker mit den Merkmalen des Anspruchs 1 weist einen Spreizkörper auf, der beispielsweise einen Kegelstumpf, einen Pyramidenstumpf oder einen Keil aufweisen kann, der zum Aufspreizen in beispielsweise eine Spreizhülse einziehbar ist. Das Aufspreizen erfolgt also durch eine Relativbewegung des Spreizkörpers zu einem Spreizelement, beispielsweise einer Spreizzunge einer Spreizhülse, in einer Längs- oder Axialrichtung des Spreizankers. Denkbar ist auch ein Aufspreizen durch Drehung eines Spreizkörpers, der sich zwischen Spreizzungen befindet, und der eine oder mehrere spiralförmige Umfangsflächen aufweist, die sich über einen Bruchteil des Umfangs erstrecken. Durch Drehung des Spreizkörpers in der Spreizhülse werden die Spreizzungen auseinandergedrückt, d.h. die Spreizzungen und die Spreizhülse werden aufgespreizt. Die Relativbewegung zum Aufspreizen des Spreizankers ist in diesem Fall eine Drehbewegung des Spreizkörpers relativ zum Spreizanker. Die Aufzählung der Spreizkörperformen und der Spreizvorgänge ist beispielhaft und nicht abschließend.

Des Weiteren weist der erfindungsgemäße Spreizanker einen Werkzeugsitz zum Ansetzen eines Werkzeugs zum Aufspreizen des Spreizankers auf. Der Werkzeugsitz ist beispielsweise ein Mehrkant, insbesondere ein Innenmehrkant, ein Innenstern oder ein Torx. Mit dem Werkzeug ist die Relativbewegung des Spreizkörpers zum Spreizanker zum Aufspreizen des Spreizankers oder eine die Relativbewegung erzeugende Bewegung erzeugbar bzw. auf den Spreizanker übertragbar. Vorzugsweise wird die Bewegung des Werkzeugs durch Formschluss auf den Werkzeugsitz des Spreizankers übertragen. Allerdings ist ein Kraftschluss zwischen Werkzeug und Werkzeugsitz nicht ausgeschlossen.

Außerdem weist der erfindungsgemäße Spreizanker eine Ausrückeinrichtung auf, die das Werkzeug außer Eingriff vom Werkzeugsitz des Spreizankers bringt, wenn der Spreizanker aufgespreizt ist. Der erfindungsgemäße Spreizanker beendet das Aufspreizen von selbst, es ist beispielsweise kein Drehmomentschlüssel notwendig und beispielsweise ein Elektro-, pneumatischer- oder sonstiger Motorschrauber kann betätigt werden, bis er vom Werkzeugsitz des Spreizankers von dessen Ausrückeinrichtung außer Eingriff gebracht wird.

Eine Ausgestaltung der Erfindung sieht vor, dass die Relativbewegung zum Aufspreizen des Spreizankers eine Längsbewegung des Spreizkörpers in Bezug auf das Spreizelement ist. Der Spreizanker weist beispielsweise einen Gewindetrieb auf, der eine drehende Antriebsbewegung des Werkzeugsitz in die Längsbewegung des Spreizkörpers in Bezug auf den Spreizanker zum Aufspreizen des Spreizankers wandelt. Der Werkzeugsitz ist bei dieser Ausgestaltung vorzugsweise zu einem durch Formschluss drehfesten Ansetzen eines Drehwerkzeugs ausgebildet. Beispiele solcher Werkzeugsitze sind die bereits genannten Mehrkant, Innenmehrkant, Innenstern oder Torx.

Eine Weiterbildung dieser Ausgestaltung der Erfindung sieht vor, dass der Gewindetrieb zugleich auch die Ausrückeinrichtung oder einen Teil der Ausrückeinrichtung bildet. Die Längsbewegung des Gewindetriebs, die zum Aufspreizen des Spreizankers genutzt wird, drückt zugleich auch ein Drehwerkzeug, das am Werkzeugsitz angesetzt ist und ihn zum Aufspreizen des Spreizankers drehend antreibt, vom Werkzeugsitz ab, wenn der Spreizanker aufgespreizt ist. Auf diese Weise wird das Drehwerkzeug am Ende des Aufspreizens des Spreizankers außer Eingriff vom Werkzeugsitz des Spreizankers gebracht, was auch als Ausrücken bezeichnet werden kann.

Eine Weiterbildung der Erfindung sieht vor, dass der Gewindetrieb einen Gewindeschaft aufweist, der beispielsweise mit dem Spreizkörper verbunden ist. Durch eine drehende Antriebsbewegung bewegt sich der Gewindeschaft längs zum Spreizanker, zieht den Spreizkörper in die Spreizhülse ein, d.h. spreizt den Spreizanker auf, und drückt am Ende des Aufspreizens das Drehwerkzeug vom Werkzeugsitz ab.

Eine Weiterbildung sieht vor, dass der Gewindetrieb eine Innengewindehülse aufweist, deren Innengewinde mit einem Gewinde des Gewindeschafts in Eingriff steht. Zum Aufspreizen wird die Innengewindehülse relativ zum Gewindeschaft drehend angetrieben, wodurch der Gewindeschaft eine Längsbewegung relativ zur Innengewindehülse ausführt. Diese Längsbewegung des Gewindeschafts relativ zum Innengewinde wird sowohl zum Aufspreizen des Spreizankers als auch zum Abdrücken des Drehwerkzeugs vom Werkzeugsitz am Ende des Aufspreizens des Spreizankers genutzt.

Der Werkzeugsitz ist in diesem Fall vorzugsweise ein Hohlsitz, also beispielsweise ein Innenmehrkant, ein Innenstern oder ein Torx. Durch den Drehantrieb der Innengewindehülse relativ zum Gewindeschaft bewegt sich der Gewindeschaft wie bereits beschrieben relativ zur Innengewindehülse in Längsrichtung des Spreizankers. Dabei gelangt der Gewindeschaft in den als Hohlsitz ausgebildeten Werkzeugsitz und drückt das Drehwerkzeug aus dem Werkzeugsitz heraus. Die Geometrie der Anordnung wird so gewählt, dass das Drehwerkzeug aus dem Werkzeugsitz herausgedrückt wird, wenn der Spreizanker aufgespreizt ist.

Die Erfindung wird nachfolgend anhand eines in der Zeichnung dargestellten Ausführungsbeispiels näher erläutert. Die einzige Figur zeigt einen Achsschnitt eines erfindungsgemäßen Spreizankers.

Der in der Zeichnung dargestellte, erfindungsgemäße Spreizanker 1 weist einen Spreizkörper 2 mit einem koaxialen Innengewinde auf, in das eine Gewindestange als Gewindeschaft 3 eingeschraubt ist. Auf dem Gewindeschaft 3 ist eine Spreizhülse 4 axial-, d.h. in Längsrichtung des Spreizankers 1, verschieblich angeordnet. Die Spreizhülse 4 ist durch Längsschlitze 5 in Spreizzungen 6 unterteilt, die allgemein auch als Spreizelemente aufgefasst werden können. Die Längsschlitze 5 erstrecken sich über einen Großteil einer Länge der Spreizhülse 4, sie enden mit Abstand von einem dem Spreizkörper 2 fernen Ende der Spreizhülse 4 und sind an einem dem Spreizkörper 2 zugewandten Ende offen. Dem Spreizkörper 2 zugewandte Enden der Spreizzungen 6 weisen Innenkegelflächen auf. In Richtung der Spreizhülse 4 verjüngt sich der Spreizkörper 2 mit einer kegelstumpfförmigen Spreizfläche 7.

Auf ein dem Spreizkörper 2 fernes Ende des Gewindeschafts 3 ist eine durchmessergestufte Innengewindehülse 8 geschraubt. Sie weist ein Innengewinde 9, mit dem sie auf ein Gewinde 10 des Gewindeschafts 3 geschraubt ist, und ein zweites Innengewinde 11 mit größerem Durchmesser in einem dem Gewindeschaft 3 fernen Abschnitt auf. Zwischen den beiden Innengewinden 9, 11 weist die Innengewindehülse 3 einen Innensechskant 12 als Werkzeugsitz zu einem durch Formschluss drehfesten Ansetzen eines Drehwerkzeugs wie beispielsweise eines nicht dargestellten Sechskantschlüssels auf. Das Drehwerkzeug kann beispielsweise auch ein Sechskant-Bit für einen Elektro-, einen pneumatischen- oder sonstigen Motorschrauber sein.

Zur Verankerung in einem nicht dargestellten Ankergrund wird der Spreizanker 1 in ein zylindrisches, beispielsweise gebohrtes Loch im Ankergrund eingebracht und es wird das nicht dargestellte Drehwerkzeug in den den Werkzeugsitz bildenden Innensechskant 12 der Innengewindehülse 8 eingebracht, was als Ansetzen des Drehwerkzeugs am Werkzeugsitz aufgefasst werden kann. Das auf den Gewindeschaft 3 geschraubte Innengewinde 9 der Innengewindehülse 8 und das Gewinde 10 des Gewindeschafts 3 bilden einen Gewindetrieb 9, 10. Durch Drehantrieb der Innengewindehülse 8 bewegt sich der Gewindeschaft 3 in Längsrichtung des Spreizankers 1 relativ zur Innengewindehülse 8, er zieht den Spreizkörper 2 zwischen die Spreizzungen 6 der Spreizhülse 4 bzw. umgekehrt schiebt die Innengewindehülse 8 die Spreizzungen 6 der Spreizhülse 4 auf den Spreizkörper 2 auf. Die Spreizzungen 6 werden auseinandergedrückt, d.h. aufgespreizt, was auch als Aufspreizen der Spreizhülse 4 und des Spreizankers 1 aufgefasst werden kann. Durch das Aufspreizen der Spreizzungen 6 wird der Spreizanker 1 in dem nicht dargestellten Ankergrund verankert.

Die Längsbewegung des Gewindeschafts 3 relativ zur Innengewindehülse 8 bei deren Drehantrieb zum Aufspreizen des Spreizankers 1 bewegt den Gewindeschaft 3 in den den Werkzeugsitz bildenden Innensechskant 12 hinein bzw. durch diesen hindurch. Dabei drückt der Gewindeschaft 3 das nicht dargestellte Drehwerkzeug aus dem Innensechskant 12 heraus, der Gewindeschaft 3 bildet eine Ausrückeinrichtung oder einen Teil einer Ausrückeinrichtung, die das Drehwerkzeug außer Eingriff von dem den Werkzeugsitz bildenden Innensechskant 12 bringt. Dadurch beendet der Spreizanker 1 das Aufspreizen von selbst.

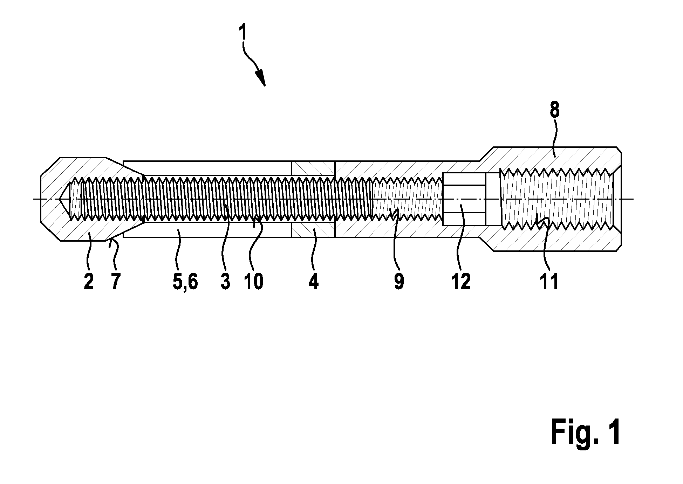

In dem in Figur 1 dargestellten, nicht-aufgespreizten Zustand des Spreizankers 1 liegt die Innengewindehülse 8 an der Spreizhülse 4 und liegen die nicht-aufgespreizten Spreizzungen 6 mit ihren Innenkegelflächen an ihren dem Spreizkörper 2 zugewandten Enden an der kegelstumpfförmigen Spreizfläche 7 des Spreizkörpers 2 an und es besteht ein axialer Abstand zwischen dem dem Spreizkörper 2 fernen Ende des Gewindeschafts 3 und dem Innensechskant 12 der Innengewindehülse 8. Dieser Abstand zwischen dem Gewindeschaft 3 und dem Innensechskant 12 bestimmt zusammen mit einer Tiefe (axiale Länge) des Innensechskants 12 eine Länge, um die der Spreizkörper 2 bis zum Beenden des Aufspreizens durch das Herausdrücken des nicht dargestellten Drehwerkzeugs aus dem Innensechskant 12 in die Spreizhülse 4 eingezogen bzw. die Spreizhülse 4 mit ihren Spreizzungen 6 auf den Spreizkörper 2 aufgeschoben wird. Die Länge der Längsbewegung des Spreizkörpers 2 relativ zur Spreizhülse 4 bestimmt die Aufspreizung der Spreizzungen 6.

### Bezugszeichenliste

### Spreizanker

- 1: Spreizanker
- 2: Spreizkörper
- 3: Gewindeschaft
- 4: Spreizhülse
- 5: Längsschlitze
- 6: Spreizzungen; Spreizelement
- 7: Spreizfläche
- 8: Innengewindehülse
- 9: Innengewinde
- 10: Gewinde
- 11: Innengewinde
- 12: Innensechskant; Werkzeugsitz

## Patentansprüche

1. Spreizanker, mit mindestens einem Spreizelement (6) und mit einem Spreizkörper (2), mit dem der Spreizanker (1) durch eine Relativbewegung des Spreizkörpers (2) in Bezug zu dem mindestens einen Spreizelement (6) aufspreizbar ist, und mit einem Werkzeugsitz (12) zum Ansetzen eines Werkzeugs zum Aufspreizen des Spreizankers (1), **dadurch gekennzeichnet, dass** der Spreizanker (1) eine Ausrückeinrichtung aufweist, die das Werkzeug am Ende des Aufspreizens außer Eingriff vom Werkzeugsitz (12) bringt.

2. Spreizanker nach Anspruch 1, **dadurch gekennzeichnet, dass** der Spreizanker (1) eine Spreizhülse (4) mit dem mindestens einen Spreizelement (6) aufweist, die durch Einziehen des Spreizkörpers (2) in die Spreizhülse (4) aufspreizbar ist.

3. Spreizanker nach Anspruch 1, **dadurch gekennzeichnet, dass** der Spreizanker (1) durch eine Längsbewegung des Spreizkörpers (2) in Bezug auf das mindestens eine Spreizelement (6) als Relativbewegung aufspreizbar ist, dass der Spreizanker (1) einen Gewindetrieb (9, 10) zur Erzeugung der Längsbewegung zwischen dem Spreizelement (6) und dem Spreizkörper (2) aus einer drehenden Antriebsbewegung aufweist, und dass der Werkzeugsitz (12) zu einem durch Formschluss drehfesten Ansetzen des Drehwerkzeugs ausgebildet ist.

4. Spreizanker nach Anspruch 3, **dadurch gekennzeichnet, dass** der Gewindetrieb (9, 10) die Ausrückeinrichtung oder einen Teil von ihr bildet und dass die Längsbewegung des Gewindetriebs (9, 10) ein Drehwerkzeug, das am Werkzeugsitz (12) angesetzt ist und mit dem der Gewindetrieb (9, 10) zum Aufspreizen des Spreizankers (1) drehend angetrieben wird, am Ende des Aufspreizens des Spreizankers (1) außer Eingriff vom Werkzeugsitz (12) bringt.

5. Spreizanker nach Anspruch 4, **dadurch gekennzeichnet, dass** der Spreizanker (1) einen Gewindeschaft (3) als Teil des Gewindetriebs (9, 10) aufweist, der bei einem Drehantrieb des Gewindetriebs (9, 10) eine Längsbewegung zum Werkzeugsitz (12) ausführt und dabei am Ende des Aufspreizens des Spreizankers (1) ein am Werkzeugsitz (12) angesetztes Drehwerkzeug, mit dem der Gewindetrieb (9, 10) zum Aufspreizen des Spreizankers (1) drehend angetrieben wird, außer Eingriff vom Werkzeugsitz (12) bringt.

6. Spreizanker nach Anspruch 5, **dadurch gekennzeichnet, dass** der Spreizanker (1) eine Innengewindehülse (8) als Teil des Gewindetriebs (9, 10) aufweist, deren Innengewinde (9) mit einem Gewinde (10) des Gewindeschafts (3) in Eingriff steht, dass die Innengewindehülse (8) den Werkzeugsitz (12) aufweist, und dass der Werkzeugsitz (12) ein Hohlsitz ist, in den sich der Gewindeschaft (3) hinein bzw. durch den sich der Gewindeschaft (3) hindurch bewegt, wenn die Innengewindehülse (8) zum Aufspreizen des Spreizankers (1) drehend angetrieben wird, so dass der Gewindeschaft (3) ein am Werkzeugsitz (12) angesetztes Drehwerkzeug am Ende des Aufspreizens des Spreizankers (1) aus dem Werkzeugsitz (12) herausdrückt.

## Claims

1. Expansible anchor having at least one expansion element (6) and having an expander body (2) by means of which the expansible anchor (1) is arranged to be expanded as a result of a relative movement between the expander body (2) and the at least one expansion element (6), and having a tool seating (12) for application of a tool for expansion of the expansible anchor (1), **characterised in that** the expansible anchor (1) has a decoupling arrangement which brings the tool out of engagement with the tool seating (12) at the end of the expansion.

2. Expansible anchor according to claim 1, **characterised in that** the expansible anchor (1) has an expansion sleeve (4) having the at least one expansion element (6), which expansion sleeve (4) is arranged to be expanded by drawing the expander body (2) into the expansion sleeve (4).

3. Expansible anchor according to claim 1, **characterised in that** the expansible anchor (1) is arranged to be expanded by, as the relative movement, a longitudinal movement of the expander body (2) relative to the at least one expansion element (6); **in that** the expansible anchor (1) has a threaded driving mechanism (9, 10) for producing the longitudinal movement between the expansion element (6) and the expander body (2) from a turning drive movement; and **in that** the tool seating (12) is constructed for application of the turning tool in a manner preventing relative rotation as a result of a shape-based connection.

4. Expansible anchor according to claim 3, **characterised in that** the threaded driving mechanism (9, 10) forms the decoupling arrangement or a part thereof; and **in that** the longitudinal movement of the threaded driving mechanism (9, 10) brings a turning tool, which has been applied to the tool seating (12) and by means of which the threaded driving mechanism (9, 10) is driven in rotation for expansion of the expansible anchor (1), out of engagement with the tool seating (12) at the end of the expansion of the expansible anchor (1).

5. Expansible anchor according to claim 4, **characterised in that** the expansible anchor (1) has a threaded shaft (3) as part of the threaded driving mechanism (9, 10), which makes a longitudinal movement relative to the tool seating (12) when the threaded driving mechanism (9, 10) is driven in rotation and which, in the process, at the end of the expansion of the expansible anchor (1) brings a turning tool applied to the tool seating (12), by means of which the threaded driving mechanism (9, 10) is driven in rotation for expansion of the expansible anchor (1), out of engagement with the tool seating (12).

6. Expansible anchor according to claim 5, **characterised in that** the expansible anchor (1) has an internally threaded sleeve (8) as part of the threaded driving mechanism (9, 10), the internal thread (9) of which is in engagement with a thread (10) of the threaded shaft (3); **in that** the internally threaded sleeve (8) has the tool seating (12); and **in that** the tool seating (12) is a hollow seating, into which the threaded shaft (3) moves and/or through which the threaded shaft (3) moves, when the internally threaded sleeve (8) is driven in rotation for expansion of the expansible anchor (1), so that the threaded shaft (3) pushes a turning tool applied to the tool seating (12) out from the tool seating (12) at the end of the expansion of the expansible anchor (1).

## Revendications

1. Cheville d'ancrage expansible comprenant au moins un élément expansible (6), un corps d'expansion (2) par lequel ladite cheville d'ancrage expansible (1) peut être déployée suite à un mouvement relatif dudit corps d'expansion (2) vis-à-vis dudit élément expansible (6) à présence minimale, et un siège (12) dédié à la venue en prise d'un outil dévolu au déploiement de ladite cheville d'ancrage expansible (1), **caractérisée par le fait que** la cheville d'ancrage expansible (1) est pourvue d'un dispositif de désengagement qui, à l'achèvement du déploiement, neutralise la prise instaurée entre l'outil et le siège (12) affecté audit outil.

2. Cheville d'ancrage expansible selon la revendication 1, **caractérisée par le fait que** ladite cheville d'ancrage expansible (1) comporte une douille expansible (4) munie de l'élément expansible (6) à présence minimale, et pouvant être déployée par enfoncement du corps d'expansion (2) dans ladite douille expansible (4).

3. Cheville d'ancrage expansible selon la revendication 1, **caractérisée par le fait que** ladite cheville d'ancrage expansible (1) peut être déployée par un mouvement longitudinal représentant un mouvement relatif du corps d'expansion (2) vis-à-vis de l'élément expansible (6) à présence minimale ; **par le fait que** ladite cheville d'ancrage expansible (1) est dotée d'une transmission à vis (9, 10) conçue pour engendrer, sur la base d'un mouvement rotatoire d'entraînement, ledit mouvement longitudinal entre ledit élément expansible (6) et ledit corps d'expansion (2) ; et **par le fait que** le logement (12), affecté à un outil, est réalisé en vue d'une venue en prise de l'outil rotatif, avec verrouillage en rotation par complémentarité de formes.

4. Cheville d'ancrage expansible selon la revendication 3, **caractérisée par le fait que** la transmission à vis (9, 10) matérialise le dispositif de désengagement, ou une partie de ce dernier ; et **par le fait qu'**à l'achèvement du déploiement de ladite cheville d'ancrage expansible (1), le mouvement longitudinal de ladite transmission à vis (9, 10) neutralise la prise, instaurée avec le siège (12), d'un outil rotatif qui est mis en prise avec ledit siège (12) et par lequel ladite transmission à vis (9, 10) est entraînée en rotation afin de déployer ladite cheville d'ancrage expansible (1).

5. Cheville d'ancrage expansible selon la revendication 4, **caractérisée par le fait que** ladite cheville d'ancrage expansible (1) comprend, en tant que partie de la transmission à vis (9, 10), une tige filetée (3) qui, lors d'un entraînement en rotation de ladite transmission à vis (9, 10), accomplit un mouvement longitudinal vers le siège (12) affecté à un outil et neutralise alors, à l'achèvement du déploiement de ladite cheville d'ancrage expansible (1), la prise instaurée entre ledit siège (12) et un outil rotatif qui est mis en prise avec ledit siège (12) et par lequel ladite transmission à vis (9, 10) est entraînée en rotation, afin de déployer ladite cheville d'ancrage expansible (1).

6. Cheville d'ancrage expansible selon la revendication 5, **caractérisée par le fait que** ladite cheville d'ancrage expansible (1) comprend, en tant que partie de la transmission à vis (9, 10), une douille (8) à filetage intérieur dont le filetage intérieur (9) est en prise avec un filetage (10) de la tige filetée (3) ; **par le fait que** ladite douille (8) à filetage intérieur comporte le siège (12) affecté à un outil ; et **par le fait que** ledit siège (12) est un siège creux dans lequel la tige filetée (3) pénètre, ou que ladite tige filetée (3) parcourt respectivement de part en part lorsque ladite douille (8) à filetage inférieur est entraînée en rotation en vue du déploiement de ladite cheville d'ancrage expansible (1), de sorte qu'à l'achèvement du déploiement de ladite cheville d'ancrage expansible (1), un outil rotatif mis en prise avec ledit siège (12), est expulsé dudit siège (12) par ladite tige filetée (3).
